# EUROPÄISCHE PATENTSCHRIFT

(11) **EP 1 133 353 B1**
(45) Veröffentlichungstag und Bekanntmachung des Hinweises auf die Patenterteilung: **26.07.2006**
(21) Anmeldenummer: 99962036.2
(22) Anmeldetag: 26.10.1999
(51) Int. Cl.: B01J 21/18, B01J 21/06, B01J 23/00, B01D 53/86

(54) **KATALYSATORKÖRPER UND VERFAHREN ZUR MINDERUNG VON HALOGENIERTEN KOHLENWASSERSTOFFEN**
CATALYST BODY AND METHOD FOR REDUCING HALOGENATED HYDROCARBONS
POT CATALYTIQUE ET PROCEDE POUR REDUIRE LES HYDROCARBURES HALOGENES

(30) Priorität: 09.11.1998 DE 19851555
(43) Veröffentlichungstag der Anmeldung: 19.09.2001
(73) Patentinhaber: Argillon GmbH, 96257 Redwitz (DE)
(72) Erfinder: FISCHER, Stefan, D-96215 Lichtenfels (DE); PAJONK, Günther, D-96199 Zapfendorf (DE); WITZEL, Frank, Bloomfields Hills, MI 48304 (US)
(74) Vertreter: Tergau & Pohl Patentanwälte
(86) Internationale Anmeldenummer: PCT/DE1999/003411
(87) Internationale Veröffentlichungsnummer: WO 2000/027524

(56) Entgegenhaltungen:
- WO-A-91/04780
- DE-A- 19 504 597
- US-A- 5 214 014
- DATABASE WPI Section Ch, Week 198203 Derwent Publications Ltd., London, GB; Class E36, AN 1982-04774E XP002133315 & JP 56 158151 A (BABCOCK-HITACHI KK), 5. Dezember 1981 (1981-12-05)
- PATENT ABSTRACTS OF JAPAN vol. 1997, no. 02, 28. Februar 1997 (1997-02-28) & JP 08 266870 A (MITSUBISHI HEAVY IND LTD), 15. Oktober 1996 (1996-10-15)

## Beschreibung

Die Erfindung betrifft ein Verfahren zur Minderung von halogenierten Kohlenwasserstoffen, insbesondere von Dioxinen und/oder Furanen, wobei ein die halogenierten Kohlenwasserstoffe enthaltender Gasstrom über den Katalysatorkörper geleitet wird.

In dem Abgas einer technischen Anlage, wie beispielsweise einem Kraftwerk, welches mit einem fossilen Brennstoff betrieben wird, einer Müllverbrennungsanlage oder einer Sinteranlage, in welcher Metallerz durch Sintern der Verhüttung zugänglich gemacht wird, sind in nicht unerheblichem Umfang halogenierte Kohlenwasserstoffe enthalten. Halogenierte Kohlenwasserstoffe sind beispielsweise Chlorbenzole, Chlorphenole, polychlorierte Biphenyle, oder aber auch polyhalogenierte zyklische Ether (Furane) sowie zyklische Diether (die eigentlichen Dioxine). Viele dieser halogenierten Kohlenwasserstoffe, insbesondere die polychlorierten Dibenzodioxine (PCDD) und die polychlorierten Dibenzofurane (PCDF) wirken für den Menschen in hohem Maße toxisch. Aus diesem Grund unterliegen die zulässigen Emissionswerte einer technischen Anlage für derartige halogenierte Kohlenwasserstoffe strengen gesetzlichen Auflagen.

Um die gesetzlichen Auflagen erfüllen zu können, werden Katalysatorkörper zur Minderung der halogenierten Kohlenwasserstoffe im Abgas der genannten technischen Anlagen eingesetzt. So ist beispielsweise aus der Siemens-Firmenschrift "Diox-Katalysatoren zerstören Dioxine in den Rauchgasen von Müllverbrennungsanlagen", Bestellnr. A96001-U11-A293, 1995, ein von Abgas durchströmbarer Katalysatorkörper mit einer Aktivmasse auf Basis von Titandioxid bekannt, welcher in einem Temperaturbereich des zu behandelnden Abgases zwischen 200 und 400 °C im Abgas enthaltene Dioxine zu Kohlendioxid, Wasser und Halogenwasserstoffen abbaut.

In vielen Fällen liegt jedoch die Temperatur des zu behandelnden Abgases unterhalb von 250 °C, so daß die katalytische Aktivität des genannten Katalysatorkörpers zu gering wird, um noch eine effektive Minderung der halogenierten Kohlenwasserstoffe zu erzielen. Insbesondere treten derart niedrige Temperaturen im Abgas einer Müllverbrennungsanlage oder einer Sinteranlage auf. Auch ist bekannt, daß bei Temperaturen unterhalb von 200 °C durch die sogenannte DeNovo-Synthese bei Vorhandensein von organischen Kohlenstoffverbindungen, Alkali- oder Erdalkali-Chloriden sowie als Katalysatoren wirkenden Metallverbindungen Dioxine und/oder Furane beim Abkühlen im Abgas von neuem gebildet werden. Auch in einem solchen Fall wird eine Behandlung des Abgases in einem Temperaturbereich erforderlich, in welchem die katalytische Aktivität des genannten Katalysatorkörpers nicht mehr ausreichend ist.

Es müssen daher andere Maßnahmen zur Behandlung von niedertemperaturigen Abgasen ergriffen werden. Hierzu ist es aus W. Weiss: "Minderung der PCDD/PCDF-Emissionen an einer Eisenerz-Sinteranlage", VDI-Berichte Nr. 1298, (1996), Seiten 249 ff, bekannt, dem Abgas einer Sinteranlage nach Durchströmen eines Elektrofilters als Zuschlagstoff eine Mischung aus Kalziumhydroxid Ca(OH)₂ und Kohle in Form von Herdofenkoks oder Aktivkohle beizugeben, den mit Dioxinen und/oder Furanen teilweise befrachteten Zuschlagstoff mittels einer Staubfilterung dem Abgas wieder zu entnehmen und diesem erneut zuzugeben. Dabei dient die Kohle als ein Adsorptionsmittel für die Dioxine/Furane, während das Kalziumhydroxid die Gefahr einer Selbstentzündung der Kohle verringert.

Des weiteren ist aus G. Mayer-Schwinning et al.: "Minderungstechniken zur Abgasreinigung für PCDD/F", VDI-Berichte Nr. 1298, (1996), Seiten 191 ff, bekannt, dem Abgas einer Müllverbrennungsanlage nach konventioneller Abgasreinigung mit Hilfe eines Wirbelschicht-Reaktors als Dioxine/Furane adsorbierenden Zuschlagstoff Zeolithe beizugeben. Die sich im Abgas befindlichen, teilweise mit Dioxinen/Furanen beladenen Zeolithe werden wiederum mittels einer Staubfilterung entnommen und erneut dem Wirbelschicht-Reaktor zugeführt. Auch ist es hieraus bekannt, die Zeolithe zusammen mit Kalziumhydroxid dem Abgas zuzugeben.

Nachteiligerweise erschöpft sich die Adsorptionsfähigkeit des Zuschlagstoffes mit der Zeit, so daß der verbrauchte und mit Dioxinen/Furanen beladene Zuschlagstoff auf einer Deponie endgelagert oder durch eine thermische Behandlung oder durch Einbindung in eine Schlacke unschädlich gemacht werden muß. Auch sind sowohl die Zeolithe als auch das bei Verwendung der Kohle als Zuschlagstoff unabdingbare Kalziumhydroxid vergleichsweise teuer, so daß das Einhalten der Emissionsgrenzwerte für halogenierte Kohlenwasserstoffe bei einer technischen Anlage auf diese Art und Weise mit einem hohen Kostenaufwand verbunden ist.

Weiter wird in der DE 195 04 597 A1 vorgeschlagen, dem Abgas einer technischen Anlage zur Minderung der enthaltenen halogenierten Kohlenwasserstoffe gebrauchte DeNOx-Katalysatoren in Pulverform zuzuführen. Die mit den halogenierten Kohlenwasserstoffen beladenen DeNOx-Katalysatoren werden wiederum mittels einer Staubfilterung dem Abgas entnommen und diesem erneut zugegeben. Bei diesem Verfahren wird sowohl die Adsorptionsfähigkeit der DeNOx-Katalysatoren als auch deren Aktivität zur Oxidation der halogenierten Kohlenwasserstoffe ausgenutzt. Die angegebenen DeNOx-Katalysatoren umfassen als Grundmaterial Titandioxid und weisen als Beimengungen Wolframtrioxid, Vanadiumpentoxid und Molybdäntrioxid auf.

Nachteiligerweise ist jedoch die Oxidationsaktivität der gebrauchten DeNOx-Katalysatoren für die Zersetzung der halogenierten Kohlenwasserstoffe relativ gering, so daß eine hohe mittlere Kontaktzeit des Abgases mit den gebrauchten DeNOx-Katalysatoren von mehreren Tagen erforderlich wird. Dies wird durch häufige Rezirkulation der dem Abgas beigegebenen DeNOx-Katalysatoren erzielt. Es ist also auch bei Verwendung der gebrauchten DeNOx-Katalysatoren als einen Zuschlagstoff ein aufwendiges Rezirkulationsverfahren zur Behandlung des Abgases einer technischen Anlage erforderlich.

Aus der WO 91/17828 ist nun ein Katalysatorkörper auf Basis eines Ionen-ausgetauschten Zeolithen zum Abbau von halogenierten Kohlenwasserstoffen in einem Temperaturbereich zwischen 150 und 450 °C bekannt. Der Ionen-ausgetauschte Zeolith enthält als Metallionen Vanadium, Chrom, Kobalt, Nickel, Kupfer, Eisen, Molybdän oder Mangan und ist mit Titan, Vanadium, Chrom, Mangan, Eisen, Kobalt, Nickel, Kupfer, Molybdän, Palladium oder Platin zusätzlich imprägniert. Der Katalysatorkörper wird in Form von Pellets eingesetzt und oxidiert die halogenierten Kohlenwasserstoffe in Anwesenheit von Sauerstoff zu Kohlendioxid und Halogensäuren. Nachteiligerweise ist ein derartiger Katalysatorkörper auf Basis eines Ionengetauschten Zeolithen vergleichsweise teuer. Allerdings entfällt das angesprochene Problem einer aufwendigen Rezirkulation bei Verwendung eines adsorbierenden Zuschlagstoffes.

Aus der US 5,214,014 ist ein Verfahren zur Beseitigung von übelriechenden Komponenten mit Hilfe eines Katalysators zu entnehmen.

Aufgabe der Erfindung ist es, ein einfaches und billiges Verfahren zur Minderung von halogenierten Kohlenwasserstoffen aus dem Abgas einer technischen Anlage anzugeben. Auch soll sich dieses Verfahren insbesondere zur Minderung von halogenierten Kohlenwasserstoffen in einem niedertemperaturigen Abgas, d.h. bei einer Temperatur von unterhalb 250 °C, eignen.

Die Aufgabe wird erfindungsgemäß durch ein Verfahrene mit den Merkmalen des Patentanspruchs 1. Danach wird ein Teil der halogenierten Kohlenwasserstoffe zu Wasser, Kohlendioxid und Halogensäure umgesetzt und ein Teil der halogenierten Kohlenwasserstoffe wird adsorbiert.

Durch die Adsorption eines Teils der halogenierten Kohlenwasserstoffe wird gewissermaßen ein Zwischenspeicher geschaffen. Mit zunehmender Verweildauer auf dem Katalysatorkörper oder bei zwischenzeitlich höheren Temperatur des Abgases werden die adsorbierten halogenierten Kohlenwasserstoffe allmählich umgesetzt.

In besonderem Maße eignet sich das Verfahren zur Minderung der halogenierten Kohlenwasserstoffe zur Anwendung bei niedrigen Temperaturen des Abgases, insbesondere bei Temperaturen zwischen 130 und 250 °C.

Die Erfindung geht dabei von der Tatsache aus, daß Kohle eine gute Adsorptionsfähigkeit für halogenierte Kohlenwasserstoffe aufweist. Wie bereits erwähnt, wird im Stand der Technik aufgrund dieser Eigenschaft Kohle als Zuschlagstoff dem zu behandelnden Abgas einer Verbrennungsanlage beigegeben, wobei die enthaltenen halogenierten Kohlenwasserstoffe auf der Kohle adsorbieren und damit dem Abgas entzogen werden. Gleichwohl muß bei diesem bekannten Verfahren das teure Kalziumhydroxid dem Abgas beigegeben werden, um eine Entzündung der Kohle zu verhindern.

Die Erfindung geht daher weiter von der Überlegung aus, daß sich die Adsorptionseigenschaft der Kohle auch dann noch nutzen läßt, wenn sie ein Bestandteil der Aktivmasse eines Katalysatorkörpers ist. Zusätzlich besteht durch den Anteil an Oxiden die Gefahr einer Entzündung der Kohle in dem Katalysatorkörper nicht. Ferner wird nun von der weiteren Überlegung ausgegangen, daß sich die mittlere Kontaktzeit der halogenierten Kohlenwasserstoffe mit dem Katalysatorkörper aufgrund der guten Adsorptionsfähigkeit der Kohle gegenüber der Verweilzeit auf einem Katalysatorkörper, welcher keine oder nur eine geringe Adsorptionsfähigkeit aufweist, erhöht. Auch bei einer vergleichsweise niedrigen katalytischen Aktivität der Aktivmasse des Katalysatörkörpers bei einer niedrigen Temperatur kann aufgrund der hohen Kontaktzeit ein effektiver Abbau der adsorbierten halogenierten Kohlenwasserstoffe erreicht werden. Die gute katalytische Aktivität eines Katalysatorkörpers mit einer Aktivmasse auf Basis eines Titandioxids läßt sich daher durch die Beimischung von Kohle weiter verbessern. Zur Erzielung selektiver katalytischer Aktivitäten hinsichtlich unterschiedlicher halogenierter Kohlenwasserstoffe werden als Aktivkomponenten insbesondere Vanadiumpentoxid, Wolframtrioxid and/oder Molybdäntrioxid beigemengt. Von diesen Komponenten ist bekannt, daß sie als Beimengungen zu Titandioxid zur Oxidationsaktivität der Aktivmasse hinsichtlich der Umsetzung von halogenierten Kohlenwasserstoffen beitragen. Durch die Oxidationswirkung der Aktivmasse wird die Zeit bis zur Erschöpfung der Adsorptionskapazität der Kohle verlängert.

Aufgrund der guten Adsorptionsfähigkeit der beigemengten Kohle und der katalytischen Aktivität der Aktivmasse kann der Katalysatorkörper als ein vom zum behandelnden Abgas durchströmbarer Katalysatorkörper in Platten-, Waben- oder Pelletform ausgebildet sein. Ein aufwendiges Rezirkulieren zur Erhöhung der Kontaktzeit des Katalysatorkörpers mit dem zu behandelnden Abgas entfällt. Die Erfindung bietet zudem den Vorteil, daß der Katalysatorkörper gegenüber einem Katalysatorkörper auf Basis eines Zeolithen wesentlich günstiger sowohl hinsichtlich der verwendeten Materialien als auch hinsichtlich seiner Herstellungskosten ist.

Die Erfindung bietet zusätzlich den Vorteil, daß auch bei einem unkontrollierten Anstieg der Temperatur des Abgases, wie es beispielsweise bei einem Störfall der technischen Anlage vorkommen kann, keine vermehrte Emission an halogenierten Kohlenwasserstoffen zu erwarten ist. Zwar würde bei einem Anstieg der Temperatur über 350 °C die in dem Katalysatorkörper enthaltene Kohle abbrennen, jedoch bleibt die übrige Zusammensetzung der Aktivmasse erhalten. Folglich bleibt auch die katalytische Aktivität des Katalysatorkörpers bei hohen Temperaturen erhalten. Da bekanntermaßen die katalytische Aktivität mit zunehmender Temperatur des Abgases ansteigt, wird durch die verbliebene Aktivmasse bei den nun höheren Temperaturen des Abgases eine im wesentlichen vollständige Zersetzung der halogenierten Kohlenwasserstoffe gewährleistet. Bei Einsatz des angegebenen Katalysatorkörpers kann somit auch bei einem Störfall der technischen Anlage sichergestellt werden, daß keine Umweltbelastung auftritt.

Unter dem Begriff "Kohle" wird im Sinne der Erfindung ein "inkohlter" Kohlenstoff (d.h. ein nahezu reiner Kohlenstoff, der aus organischem Material entstanden ist, wie z.B. Steinkohle) genauso verstanden wie reiner Kohlenstoff, beispielsweise in Form von medizinischer Kohle oder Graphit.

Besonders von Vorteil ist es, wenn die Kohle in Form von Aktivkohle vorliegt. Unter Aktivkohle versteht man Kohlenstoffstrukturen aus kleinsten Graphitkristallen und amorphem Kohlenstoff, mit poröser Struktur und einer inneren Oberfläche zwischen 500 und 1500 m²/g. Die Aktivkohle besitzt aufgrund der hohen inneren Oberfläche eine ausgezeichnete Adsorptionsfähigkeit für die in dem Abgas enthaltenen halogenierten Kohlenwasserstoffen.

Hinsichtlich der Adsorptionsfähigkeit des Katalysatorkörpers ist es weiter von Vorteil, wenn das enthaltene Titandioxid überwiegend in der Anatas-Modifikation vorliegt und eine spezifische Oberfläche von mehr als 50 m²/g aufweist. Durch Erhöhung der spezifischen Oberfläche des Titandioxids verbessert sich neben der Adsorptionsfähigkeit des Katalysatorkörpers auch seine katalytische Aktivität zur Umsetzung der halogenierten Kohlenwasserstoffe.

Besonders gute Ergebnisse des Katalysatorkörpers zur Minderung der halogenierten Kohlenwasserstoffe lassen sich erzielen, wenn die Aktivmasse 5 bis 50 Gew.-% Kohle, 50 bis 80 Gew.-% Titandioxid, 2 bis 15 Gew.-% Wolframtrioxid, 0 bis 10 Gew.-% Molybdäntrioxid, 0 bis 10 Gew.-% Vanadiumpentoxid, 0,1 bis 6 % Aluminiumoxid und 0,1 bis 6 % Siliziumdioxid enthält. Weiter können der Aktivmasse übliche Füll- und Bindehilfsmittel, z.B. organische oder anorganische Fasern, beigemengt werden.

Für den Einsatz des Katalysatorkörpers bietet sich seine Ausgestaltung als ein durchströmbarer Katalysatorkörper an. Je nach dem Staubanteil des zu behandelnden Abgases kann es dabei vorteilhaft sein, den Katalysatorkörper als ein Vollextrudat der Aktivmasse in Wabenform oder als einen mit der Aktivmasse beschichteten Träger in Plattenform auszugestalten. Ein Katalysatorkörper in Wabenform hat dabei gegenüber einem Katalysatorkörper in Plattenform aufgrund des im allgemeinen kleineren Querschnittes der Strömungskanäle den Nachteil einer höheren Verstopfungsneigung. Allerdings ist die dem Abgas frei zugängliche Oberfläche eines Katalysatorkörpers in Wabenform im allgemeinen größer als bei dem Katalysatorkörper in Plattenform. Der Katalysatorkörper in Wabenform besitzt daher eine höhere Adsorptionsfähigkeit und eine höhere katalytische Aktivität zur Umsetzung der halogenierten Kohlenwasserstoffe.

Der Katalysatorkörper wird in an sich bekannter Art und Weise durch Mischen, Vermahlen und/oder Verkneten der angegebenen Oxide oder Mischoxide oder ihrer Vorläuferverbindungen unter Beimengung der Kohle und gegebenenfalls unter Zusatz von üblichen Hilfs- und Füllstoffen hergestellt. Die so erhaltene knetbare Masse wird dann zu Vollextrudaten weiterverarbeitet oder aber als eine Beschichtung auf einen keramischen oder metallischen Träger in Waben- oder Plattenform aufgebracht. Der so hergestellte Körper wird bei 20 bis 100 °C getrocknet und durch eine Kalzinierung bei 200 bis 400 °C (abhängig von der Konzentration der Kohle im Katalysatorkörper) zu dem Katalysatorkörper verarbeitet.

Alternativ ist es zur Herstellung des Katalysatorkörpers auch möglich, zuerst die knetbare Masse aus Titandioxid, Kohle und den Hilfs- und Füllstoffen herzustellen, die Masse zu dem Vollextrudat weiterzuverarbeiten oder damit den Träger zu beschichten und erst dann die oxidationsaktiven Aktivkomponenten durch Tränkung in einer Lösung, die die Aktivkomponenten enthält, einzubringen.

Weiter kann auch zunächst eine knetbare Masse wie angegeben, jedoch ohne Kohle hergestellt werden. Der kohlefreie, mit dieser Masse beschichtete Träger oder das kohlefreie, aus dieser Masse hergestellte Vollextrudat werden dann in einem Kohle/Wasser-Gemisch getränkt und somit mit Kohle beschichtet.

Ein Ausführungsbeispiel der Erfindung wird anhand einer Figur und anhand zweier Beispiele näher erläutert.

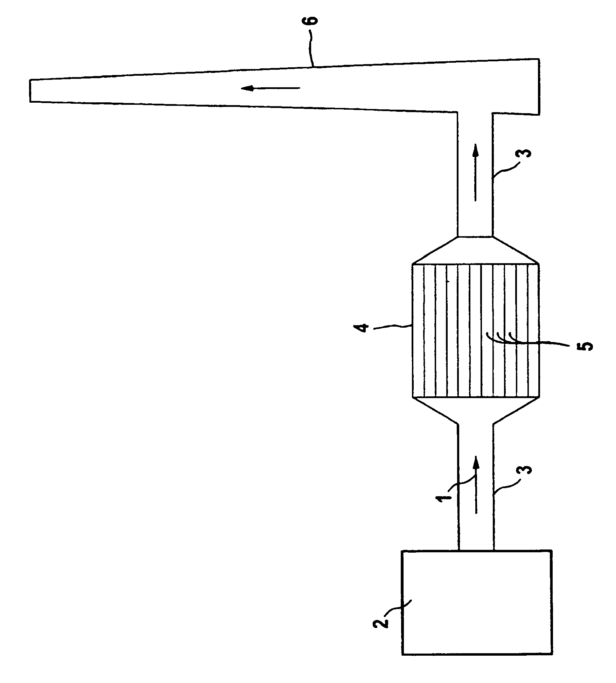

Dabei zeigt die Figur einen durchströmbaren Katalysatorkörper im Abgaskanal einer Sinteranlage.

Gemäß der Figur wird das Abgas 1 einer nicht näher dargestellten Sinteranlage 2 in einen Abgaskanal 3 abgezogen. In der Sinteranlage 2 werden in feinkörniger oder in feinstaubiger Form vorliegende Metallerze durch Sintern stückig gemacht, um sie in einem Hochofen verhütten zu können. Da dabei auch mit Schmiermitteln oder Borhilfsmitteln versetzte Abfälle der metallverarbeitenden Industrie der Verhüttung zugänglich gemacht werden, sind in dem Abgas 1 der Sinteranlage 2 in nicht unerheblichem Umfang halogenierte Kohlenwasserstoffe und insbesondere Dioxine und/oder Furane enthalten.

Zur Minderung der enthaltenen halogenierten Kohlenwasserstoffe ist in dem Abgaskanal 3 der Sinteranlage 2 ein durchströmbarer Katalysatorkörper 4 in Wabenform angeordnet. Der Katalysatorkörper 4 weist hierzu eine Anzahl von durchströmbaren, parallelen Kanälen 5 auf. Der Katalysatorkörper 4 ist als ein Vollextrudat aus einer Aktivmasse hergestellt, welche 10 Gew.-% Aktivkohle, 74 Gew.-% Titandioxid in Anatas-Modifikation, 8 Gew.-% Wolframtrioxid, 6 Gew.-% Vanadiumpentoxid und einen Rest aus keramischen Hilfs- und Füllstoffen enthält.

Das Abgas der Sinteranlage 2 hat dabei eine Temperatur von etwa 160 °C.

Durch Adsorption werden die in dem Abgas 1 enthaltenen halogenierten Kohlenwasserstoffe an den Katalysatorkörper 4 gebunden und allmählich durch Oxidation umgesetzt. Das nach Durchströmen des Katalysatorkörpers 4 von den halogenierten Kohlenwasserstoffen befreite Abgas gelangt über einen Kamin 6 in die Umwelt.

Die Adsorptions- und Oxidationsfähigkeit des angegebenen Katalysatorkörpers für halogenierte Kohlenwasserstoffe wird durch folgende Beispiele gezeigt:

### Beispiel 1:

Über einen als Vollextrudat in Form eines durchströmbaren Wabenkörpers ausgebildeten Katalysatorkörper mit einer Aktivmasse mit 10 Gew.-% Aktivkohle, 74 Gew.-% Titandioxid in Anatas-Modifikation, 8 Gew.-% Wolframtrioxid, 6 Gew.-% Vanadiumpentoxid und einem Rest aus keramischen Hilfs- und Füllstoffen wird ein Modellabgas bei einer Temperatur von 150 °C und einer Raumgeschwindigkeit von 12000/h geleitet. Der Katalysatorkörper weist eine quadratische Anströmfläche von 150 x 150 mm² und 1225 parallele Strömungskanäle auf. Das Modellgas umfaßt 200 ppm Perchlorethen in Luft. Perchlorethen wird als Modellsubstanz für Dioxin verwendet. Die Konzentration des Perchlorethens wird vor dem Katalysatorkörper und nach dem Katalysatorkörper in dem Modellgas gemessen.

In mehrfachen Testreihen wurde als Ergebnis ermittelt, daß auf dem Katalysatorkörper, bezogen auf seine Masse, etwa 5 Gew.-% Perchlorethen adsorbiert werden, und daß der Katalysatorkörper etwa 10 % des Perchlorethens katalytisch umsetzt.

### Beispiel 2:

Über einen als Vollextrudat in Form eines durchströmbaren Wabenkörpers ausgebildeten Katalysatorkörper mit einer Aktivmasse mit 50 Gew.-% Aktivkohle, 6 Gew.-% V₂O₅, 37 Gew.-% TiO₂ in Anatas-Modifikation, 4 Gew.-% WO₃ und einem Rest aus keramischen Hilfs- und Füllstoffen wird ein Modellabgas bei einer Temperatur von 150 °C und einer Raumgeschwindigkeit von 12000/h geleitet. Der Katalysatorkörper weist eine quadratische Anströmfläche von 150 x 150 mm² und 1225 parallele Strömungskanäle auf. Das Modellgas umfaßt 200 ppm Perchlorethen in Luft. Perchlorethen wird als Modellsubstanz für Dioxin verwendet. Die Konzentration des Perchlorethens wird vor dem Katalysatorkörper und nach dem Katalysatorkörper in dem Modellgas gemessen.

In mehrfachen Testreihen wurde als Ergebnis ermittelt, daß etwa 10 - 20 Gew.-% Perchlorethen, bezogen auf die Masse des Katalysatorkörpers, adsorbiert werden, und daß der katalytische Umsatz des Katalysatorkörpers etwa 5 - 10 % beträgt.

Bei höheren Temperaturen wird natürlich der Umsatz bei beiden Beispielen entsprechend ansteigen.

## Patentansprüche

1. Verfahren zur Minderung von halogenierten Kohlenwasserstoffen, insbesondere von Dioxinen und/oder Furanen, wobei ein die halogenierten Kohlenwasserstoffe enthaltender Gasstrom (1) über einen Katalysatorkörper (4) mit einer Aktivmasse geleitet wird, welche Titandioxid, Kohle, und, mindestens eine Aktivkomponente umfaßt, wobei als Aktivkomponente Vanadiumpentoxid, Wolframtrioxid und/oder Molybdäntrioxid vorgesehen ist, und wobei ein Teil der halogenierten Kohlenwasserstoffe zu Wasser, Kohlendioxid und Halogensäure umgesetzt und ein Teil der halogenierten Kohlenwasserstoffe adsorbiert wird.

2. Verfahren nach Anspruch 1, wobei der Gasstrom (1) bei Temperaturen zwischen 130 und 250 °C über den Katalysatorkörper (4) geleitet wird.

3. Verfahren nach Anspruch 1 oder 2,
wobei die Kohle in Form von Aktivkohle vorliegt.

4. Verfahren nach einem der Ansprüche 1 bis 3,
wobei das Titandioxid überwiegend in der Anatas-Modifikation vorliegt und eine spezifische Oberfläche von mehr als 50 m2/g aufweist.

5. Verfahren nach einem der Ansprüche 1 bis 4, wobei die Aktivmasse 5-50 Gew.-% Kohle, 30-80 Gew.-% Titandioxid, 2-15 Gew.-% Wolframtrioxid, 0-10 Gew.-% Molybdäntrioxid, 0-10 Gew.-% Vanadiumpentoxid, 0.1-6% Aluminiumoxid und 0.1-6% Siliziumdioxid enthält.

6. Verfahren nach einem der Ansprüche 1 bis 5, wobei der Katalysatorkörper (4) ausgebildet ist als ein Vollextrudat der Aktivmasse in Wabenform.

7. Verfahren nach einem der Ansprüche 1 bis 6, wobei der Katalysatorkörper (4) ausgebildet ist als ein mit der Aktivmasse beschichteter Träger in Plattenform.

## Claims

1. Process for reducing the levels of halogenated hydrocarbons, in particular of dioxins and/or furans, in which a gas stream (1) which contains the halogenated hydrocarbons is passed over a catalyst body (4) having an active material which comprises titanium dioxide, carbon and at least one active component, in which vanadium pentoxide, tungsten trioxide and/or molybdenum trioxide is provided as active component and in which some of the halogenated hydrocarbons are converted into water, carbon dioxide and halo acid, and some of the halogenated hydrocarbons are adsorbed.

2. Process according to Claim 1, in which the gas stream (1) is passed over the catalyst body (4) at temperatures of between 130 and 250°C.

3. Process according to Claim 1 or 2, in which the carbon is in the form of activated carbon.

4. Process according to one of Claims 1 to 3, in which the titanium dioxide is predominantly in the anatase modification and has a specific surface area of more than 50 m²/g.

5. Process according to one of Claims 1 to 4 in which the active material contains 5-50% by weight carbon, 30-80% by weight titanium dioxide, 2-15% by weight tungsten trioxide, 0-10% by weight molybdenum trioxide, 0-10% by weight vanadium pentoxide, 0.1-6% aluminum oxide and 0.1-6% silicon dioxide.

6. Process according to one of Claims 1 to 5, in which the catalyst body (4) is designed as an unsupported extrudate of the active material in honeycomb form.

7. Process according to one of Claims 1 to 6, in which the catalyst body (4) is designed as a support in plate form which is coated with the active material.

## Revendications

1. Procédé de réduction d'hydrocarbures halogénés, en particulier de dioxines et/ou de furanes, dans lequel un courant gazeux (1) contenant les hydrocarbures halogénés est conduit au-dessus d'un corps catalytique (4) ayant une masse active, qui comprend du dioxyde de titane, du charbon et au moins un composant actif, où l'on prévoit à titre de composant actif du pentoxyde de vanadium, du trioxyde de tungstène et/ou du trioxyde de molybdène et où une partie des hydrocarbures halogénés est convertie en eau, dioxyde de carbone et acide halogéné et une partie des hydrocarbures halogénés est adsorbée.

2. Procédé selon la revendication 1, **caractérisé en ce que** le courant gazeux (1) est conduit au-dessus du corps catalytique (4) à des températures situées entre 130 et 250°C.

3. Procédé selon la revendication 1 ou 2, **caractérisé en ce que** le charbon se présente sous forme de charbon actif.

4. Procédé selon l'une des revendications 1 à 3, **caractérisé en ce que** le dioxyde de titane se présente principalement sous forme de modification anatase et présente une surface spécifique de plus de 50 m²/g.

5. Procédé selon l'une des revendications 1 à 4, **caractérisé en ce que** la masse active contient de 5 à 50 % en poids de charbon, 30 à 80 % en poids de dioxyde de titane, 2 à 15 % en poids de trioxyde de tungstène, 0 à 10 % en poids de trioxyde de molybdène, 0 à 10 % en poids de pentoxyde de vanadium, 0,1 à 6 % d'oxyde d'aluminium et 0,1 à 6 % de dioxyde de silicium.

6. Procédé selon l'une des revendications 1 à 5, **caractérisé en ce que** le corps catalytique (4) prend la forme d'un extrudat complet de la masse active en nids d'abeille.

7. Procédé selon l'une des revendications 1 à 6, **caractérisé en ce que** le corps catalytique (4) prend la forme d'un support enduit de masse active en plaques.
